# EUROPEAN PATENT SPECIFICATION

(11) **EP 3 052 777 B1**
(45) Date of publication and mention of the grant of the patent: **06.12.2017**
(21) Application number: 14792581.2
(22) Date of filing: 23.09.2014
(51) Int. Cl.: F02M 26/06, F01N 3/20, F01N 13/00

(54) **EXHAUST GAS CONTROL APPARATUS FOR INTERNAL COMBUSTION ENGINE FOR VEHICLE**
STEUERUNGSAPPARAT DER ABGASNACHBEHANDLUNG EINES FAHRZEUGVERBRENNUNGSMOTORS
APPAREIL DE CONTROLE DES GAZ D'ECHAPPEMENT D'UN MOTEUR A COMBUSTION INTERNE POUR VEHICULES

(30) Priority: 04.10.2013 JP 2013209454
(43) Date of publication of application: 10.08.2016
(73) Proprietor: TOYOTA JIDOSHA KABUSHIKI KAISHA, Toyota-shi, Aichi-ken 471-8571 (JP)
(72) Inventor: OTA, Hirohiko, Toyota-shi, Aichi-ken, 471-8571 (JP); TSUCHIYAMA, Makio, Toyota-shi, Aichi-ken, 471-8571 (JP)
(74) Representative: J A Kemp
(86) International application number: PCT/IB2014/002097
(87) International publication number: WO 2015/049580

(56) References cited:
- EP-A1- 1 676 984
- WO-A1-2008/104864
- WO-A2-2009/053806

## Description

### BACKGROUND OF THE INVENTION

### 1. Field of the Invention

The invention relates to an exhaust gas control apparatus for an internal combustion engine for a vehicle.

### 2. Description of Related Art

WO 2008/104864 A discloses a method, apparatus and computer program associated with a user equipment. The method includes determining a characteristic related to a receipt of a resource allocation in a particular subframe and, based on the determined characteristic, selecting one of a plurality of transmit antennas for use in transmitting to a wireless network node. A wireless network node that is configurable to operate with the user equipment to signal the resource allocation of the indication of the transmit antenna to be used is also disclosed. WO 2009/053806 describes that, to suppress clogging of an injection nozzle that supplies fuel to an exhaust passage of an engine, a controller executes intermittent addition of fuel from the injection nozzle. In executing the intermittent addition, the controller calculates a particulate discharge amount within the exhaust passage based on the engine operation state, and multiplies the exhaust gas temperature by the intake air rate to calculate the exhaust energy. Then, based on the particulate discharge amount and the exhaust energy, the controller calculates the amount of fuel to be added.

In the past, as a method for decreasing the amount of NOx contained in exhaust gas in an internal combustion engine for a vehicle, for example, a method in which NOx is purified using a catalyst is known. For example, the internal combustion engine described in Japanese Patent Application Publication No. 2005-240811 (JP2005-24081A) includes, as an exhaust gas control apparatus that purifies NOx, a selective-reduction NOx catalyst as one of catalysts that purify NOx in exhaust gas and an adding valve for adding to the inside of an exhaust gas passage a urea solution that is used for NOx purification with the NOx catalyst. The urea solution added from the adding valve to the inside of the exhaust gas passage is hydrolyzed into ammonia by heat of the exhaust gas. The ammonia is adsorbed by the NOx catalyst, and NOx in the exhaust gas is reduced and purified by the adsorbed ammonia. This control of the amount of urea solution added is performed by an equivalent ratio control of adjusting the amount of urea solution added depending on the amount of NOx in the exhaust gas. As a result, as the amount of NOx generated increases, the amount of urea solution added is increased.

### SUMMARY OF THE INVENTION

At the time of the high-speed travelling of a vehicle, the engine load becomes relatively high, and thus the amount of NOx generated increases. When the amount of NOx generated increases in this way, the amount of a reductant added, which is adjusted by the above-described equivalent ratio control, is also increased in response to the increased amount of NOx generated. When the high-speed travelling is continued, an accumulated amount of reductant added within a predetermined period increases, and a deposit of the reductant becomes likely to be generated in the vicinity of an injection hole of the adding valve.

The invention provides an exhaust gas control apparatus for an internal combustion engine capable of suppressing the generation of the deposit in the adding valve.

An exhaust gas control apparatus for an internal combustion engine according to an aspect of the invention as defined in appended claim 1.

As described above, the amount of NOx generated increases at the time of the high-speed travelling of a vehicle. Since the exhaust gas control apparatus for an internal combustion engine includes the exhaust gas recirculation device, when the exhaust gas recirculation control is performed and a part of exhaust gas is introduced into intake air, the combustion temperature of a fuel-air mixture in a combustion chamber decreases, and thus the amount of NOx generated in the combustion chamber is decreased. At the time of the high-speed travelling of a vehicle, the engine load falls into a middle load range or a high load range, and thus the amount of new air requested in the combustion chamber increases. Therefore, at this time of the high-speed travelling of a vehicle, the amount of
exhaust gas that can be introduced by the exhaust gas recirculation control is limited, and it is difficult to introduce much exhaust gas. When a vehicle performs a high-speed travelling, the amount of NOx generated increases to a certain extent even after the performing of the exhaust gas recirculation control, and the amount of the added reductant that is adjusted by the equivalent ratio control is also increased.

In this configuration, when a period during which the vehicle speed is in a high-speed state of a predetermined value and during the performing of the exhaust gas recirculation process continues for a predetermined period or longer, a process of decreasing the amount of the added reductant to be smaller than an amount of the added reductant that is set by the equivalent ratio control is performed. Therefore, in a state in which the amount of NOx generated is likely to increase, the amount of the added reductant is decreased, and thus an increase in the accumulated amount of the added reductant is suppressed, and accordingly, it becomes possible to suppress the generation of a deposit in the adding valve.

When the reductant is added by the equivalent ratio control in a status in which the amount of NOx generated is great, the amount of reductant consumed increases. However, according to this configuration, in this status, the amount of the added reductant is decreased to be smaller than the amount of the added reductant that is set by the equivalent ratio control. Therefore, it also becomes possible to suppress an increase in the amount of reductant consumed.

In the exhaust gas control apparatus, the control unit may decrease the amount of the added reductant as an amount of a gasification of the reductant attached to the adding valve decreases. According to this configuration, as the gasification amount of the reductant attached to the adding valve decreases, and the deposit becomes more likely to be generated in the adding valve, the decrease amount of the amount of the added reductant by the control of decreasing the amount increases. Therefore, it is possible to appropriately set the decrease amount of the amount of the added reductant depending on the likelihood of the generation of the deposit.

As the external air temperature decreases, the exhaust gas temperature tends to decrease, and thus the gasification amount of the reductant attached to the adding valve decreases as the external air temperature decreases. As the temperature of the adding valve decreases, the gasification amount of reductant attached to the adding valve decreases. By changing the decrease amount of the amount of the added reductant based on at least one of the external air temperature and the temperature of the adding valve, it becomes possible to set the decrease amount depending on the gasification amount of the reductant. In this case, as the external air temperature decreases, the decrease amount of the amount of reductant added may increase. As the temperature of the adding valve decreases, the decrease amount of the amount of reductant added may increase.

In the exhaust gas control apparatus, the control unit may decrease the amount of the added reductant as an amount of the NOx generated in the internal combustion engine increases. According to this configuration, as the amount of NOx generated in the internal combustion engine increases, and the amount of the added reductant that is set by the equivalent ratio control increases, the decrease amount of the amount of the added reductant by the control of decreasing the amount increases. As the accumulated amount of the added reductant becomes more likely to increase, the decrease amount of the amount of the added reductant increases, and thus it is possible to suitably suppress the generation of the deposit accompanied by an increase in the accumulated amount of reductant added.

As the vehicle speed increases, the amount of NOx generated tends to increase. As the engine rotation speed increases, the amount of NOx generated tends to increase. As the engine load becomes higher, the amount of NOx generated tends to increase. By changing the decrease amount of the amount of the added reductant based on at least one of the vehicle speed, the engine rotation speed, and the engine load, it becomes possible to set the decrease amount depending on the amount of NOx generated. In this case, as the vehicle speed increases, the decrease amount of the amount of the added reductant may increase. As the engine rotation speed increases, the decrease amount of the amount of the added reductant may increase. As the engine load becomes higher, the amount of the added reductant may increase.

In the exhaust gas control apparatus, the control unit may shorten the above-described predetermined period as an amount of a gasification of the reductant attached to the adding valve decreases. According to this configuration, as the gasification amount of the reductant attached to the adding valve decreases, and the deposit becomes more likely to be generated in the adding valve, the predetermined period becomes shorter. As the deposit becomes more likely to be generated, the start timing of the process of decreasing the amount comes earlier, and the increase in the accumulated amount of the added reductant is suppressed earlier. According to this configuration, it is possible to appropriately set the start timing of the process of decreasing the amount depending on the likelihood of the producing of the deposit.

As the external air temperature decreases, the exhaust gas temperature tends to decrease, and thus as the external temperature decreases, the gasification amount of the reductant attached to the adding valve decreases. As the temperature of the adding valve decreases, the gasification amount of the reductant attached to the adding valve decreases. By changing the predetermined period based on at least one of the external air temperature and the temperature of the adding valve, it becomes possible to set the predetermined period depending on the gasification amount of the reductant. In this case, as the external air temperature decreases, the predetermined period may become shorter. As the temperature of the adding valve decreases, the predetermined period may become shorter.

In the exhaust gas control apparatus, the control unit may shorten the predetermined period as the amount of NOx generated in the internal combustion engine increases. According to this configuration, as the amount of NOx generated in the internal combustion engine increases, and the amount of the added reductant that is set by the equivalent ratio control increases, the predetermined period becomes shorter. As the accumulated amount of the added reductant becomes more likely to increase, the starting timing of the process of decreasing the amount comes earlier, and the increase in the accumulated amount of the added reductant is suppressed earlier. According to this configuration, it is possible to suitably suppress the generation of the deposit accompanied by the increase in the accumulated amount of the added reductant.

As the vehicle speed increases, the amount of NOx generated tends to increase. As the engine rotation speed increases, the amount of NOx generated tends to increase. As the engine load becomes higher, the amount of NOx generated tends to increase. By changing the predetermined period based on at least one of the vehicle speed, the engine rotation speed, and the engine load, it becomes possible to set the starting time of the control of decreasing the amount depending on the amount of NOx generated. In this case, as the vehicle speed increases, the predetermined period may become shorter. As the engine rotation speed increases, the predetermined period may become shorter. As the engine load becomes higher, the predetermined period may become shorter.

In a case in which a catalyst that adsorbs ammonia derived from the reductant is provided, when the amount of the added reductant is decreased by the control of decreasing the amount, the amount of ammonia adsorbed by the catalyst becomes insufficient, and there is a concern that the NOx purification rate may decrease. The control unit may adjust the amount of the added reductant such that the amount of ammonia adsorbed increases when the amount of ammonia adsorbed is equal to or less than a predetermined value even the decrease control is performed.

According to this configuration, the amount of ammonia adsorbed by the catalyst is prioritized rather than the decrease in the amount of the added reductant by the process of decreasing the amount, and thus it is possible to suppress a decrease in the NOx purification rate caused by the lacking of the amount of ammonia adsorbed.

The control of decreasing the amount can be performed when a continuous time in which the vehicle speed is in a high-speed state of a predetermined value or higher during the performing of the exhaust gas recirculation process is measured, and the measured predetermined time reaches a predetermined determination time or longer. The control of decreasing the amount can also be performed when a accumulated value of the amount of the added reductant is calculated when the vehicle speed is in a high-speed state of a predetermined value or higher during the performing of the exhaust gas recirculation control, and the calculated accumulated value reaches a predetermined determination value or more.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically illustrating a configuration of an internal combustion engine to which an exhaust gas control apparatus for an internal combustion engine according to a first embodiment is applied and the periphery thereof;
FIG. 2 is a graph illustrating an allowed area and an inhibited area of an exhaust gas recirculation process;
FIG. 3 is a flowchart illustrating a process flow of decreasing an amount of reductant added in the first embodiment;
FIG. 4 is a conceptual view illustrating an aspect of setting a decrease coefficient in the first embodiment;
FIG. 5 is a table describing a relationship between a vehicle speed and a vehicle speed coefficient in the first embodiment;
FIG. 6 is a table illustrating a relationship between an atmospheric pressure and an atmospheric pressure coefficient in the first embodiment;
FIG. 7 is a table illustrating a relationship between an adding valve temperature and an adding valve temperature coefficient in a second embodiment;
FIG. 8 is a flowchart illustrating a process flow of setting a starting time of a process of decreasing the amount in the second embodiment;
FIG. 9 is a graph illustrating a relationship among an external air temperature, the adding valve temperature, a vehicle speed, an engine rotation speed, an engine load, and a corrected basic starting time of a process of decreasing the amount in the second embodiment;
FIG. 10 is a flowchart illustrating a part of a process flow of decreasing an amount of reductant added in a third embodiment;
FIG. 11 is a flowchart illustrating a process flow of setting an accumulated amount from the starting time in a fourth embodiment;
FIG. 12 is a graph illustrating a relationship among the external air temperature, the adding valve temperature, and a corrected basic accumulated amount from the starting time in the fourth embodiment;
FIG. 13 is a flowchart illustrating a part of a process flow of decreasing an amount of reductant added in a fifth embodiment.

### DETAILED DESCRIPTION OF EMBODIMENTS

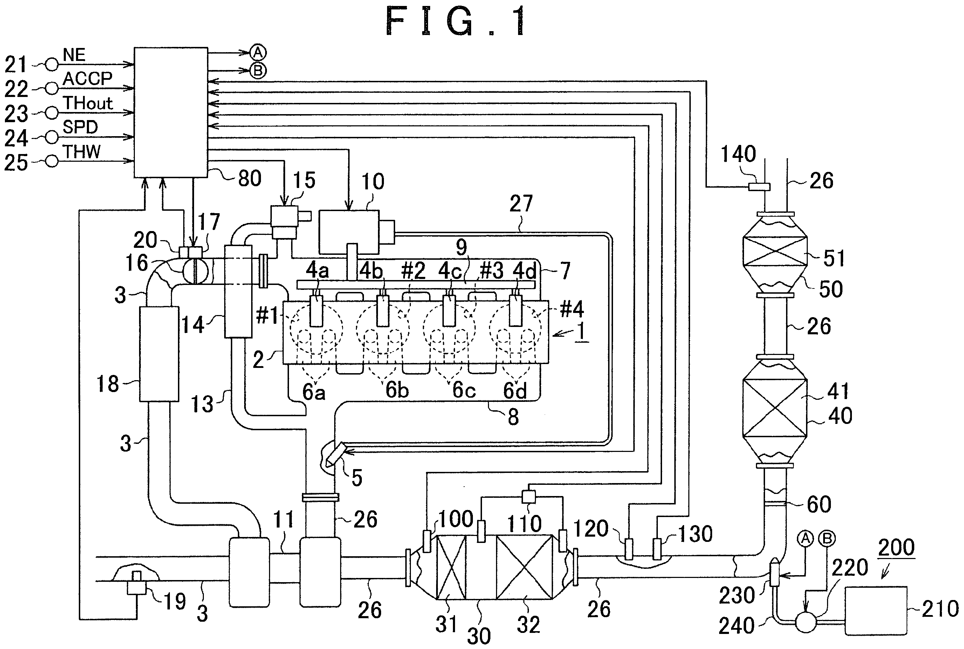

(First Embodiment) Hereinafter, an exhaust gas control apparatus for an internal combustion engine for a vehicle according to a first embodiment will be described with reference to FIGS. 1 to 7.

FIG. 1 illustrates the configuration of a diesel engine (hereinafter, simply referred to as "engine") as an internal combustion engine to which an exhaust gas control apparatus is applied and the exhaust gas control apparatus disposed in the engine 1. The engine 1 is provided with multiple cylinders #1 to #4. A cylinder head 2 is provided with multiple fuel injection valves 4a to 4d to correspond to cylinders #1 to #4. The fuel injection valves 4a to 4d inject a fuel into combustion chambers of cylinders #1 to #4. The cylinder head 2 is also provided with intake ports for introducing new air into the cylinders and exhaust ports 6a to 6d for discharging combustion gas to the outside of the cylinders to correspond to cylinders #1 to #4.

The fuel injection valves 4a to 4d are connected to a common rail 9 that accumulates high-pressure fuel. The common rail 9 is connected to a supply pump 10. The supply pump 10 suctions fuel in a fuel tank and supplies the high-pressure fuel to the common rail 9. The high-pressure fuel supplied to the common rail 9 is injected into the cylinders from the fuel injection valves 4a to 4d when the fuel injection valves 4a to 4d are opened.

An intake manifold 7 is connected to the intake ports. The intake manifold 7 is connected to an intake air passage 3. An intake throttle valve 16 for adjusting an amount of intake air is disposed in the intake air passage 3.

An exhaust manifold 8 is connected to the exhaust ports 6a to 6d. The exhaust manifold 8 is connected to an exhaust gas passage 26. A turbocharger 11 that supercharges intake air introduced into the cylinders using an exhaust gas pressure is provided in the middle of the exhaust gas passage 26. An intercooler 18 is disposed in the intake air passage 3 between an intake-side compressor of the turbocharger 11 and the intake throttle valve 16. The intake air the temperature of which is raised by the supercharging of the turbocharger 11 is cooled by the intercooler 18.

A first purification member 30 for purifying the exhaust gas is disposed on the exhaust downstream side of an exhaust-side turbine of the turbocharger 11 in the middle of the exhaust gas passage 26. In the first purification member 30, an oxidation catalyst 31 and a filter 32 are arranged in series with the exhaust flow.

A catalyst for oxidizing HC in the exhaust gas is contained in the oxidation catalyst 31. The filter 32 is a member for capturing particulate matters (PM) in the exhaust gas and is formed of porous ceramics. The filter 32 contains a catalyst for promoting oxidation of the PM, and the PM in the exhaust gas is captured at the time of passing through a porous wall of the filter 32.

A fuel adding valve 5 for supplying fuel as an additive to the oxidation catalyst 31 or the filter 32 is disposed in the vicinity of the assembly part of the exhaust manifold 8. The fuel adding valve 5 is connected to the supply pump 10 via a fuel supply pipe 27. The position of the fuel adding valve 5 can be appropriately changed as long as it is located upstream of the first purification member 30 in an exhaust system. By adjusting an injection time of fuel and performing post injection, fuel as an additive may be supplied to the oxidation catalyst 31 or the filter 32.

When the amount of PM captured by the filter 32 is greater than a predetermined value, a recycle process of the filter 32 is started and fuel is injected from the fuel adding valve 5 into the exhaust manifold 8. The fuel injected from the fuel adding valve 5 is combusted in the oxidation catalyst 31 and thus the rise in the exhaust gas temperature is achieved. By causing the exhaust gas, the temperature of which is raised by the oxidation catalyst 31, to flow in the filter 32, the temperature of the filter 32 rises, the PM captured by the filter 32 is oxidized, and thus the recycle of the filter 32 is achieved.

In the middle of the exhaust gas passage 26, a second purification member 40 that purifies exhaust gas is disposed on the exhaust downstream side of the first purification member 30. A selective-reduction NOx catalyst (hereinafter, referred to as SCR catalyst) 41 that purifies the NOx in the exhaust gas using a reductant is disposed in the second purification member 40.

In the middle of the exhaust gas passage 26, a third purification member 50 that purifies exhaust gas is disposed on the exhaust downstream side of the second purification member 40. An ammonia-oxidizing catalyst 51 that purifies the ammonia in the exhaust gas is disposed in the third purification member 50.

The engine 1 is provided with a urea solution supply mechanism 200 as a reductant supply mechanism that adds a reductant to the SCR catalyst 41. The urea solution supply mechanism 200 includes a tank 210 that reserves a urea solution, a urea adding valve 230 that injects and supplies the urea solution into the exhaust gas passage 26, a supply passage 240 that connects the urea adding valve 230 and the tank 210 to each other, and a pump 220 that is disposed in the middle of the supply passage 240.

The urea adding valve 230 is disposed in the exhaust gas passage 26 between the first purification member 30 and the second purification member 40, and an injection hole thereof is opened to the SCR catalyst 41. When the urea adding valve 230 is opened, the urea solution is injected and supplied into the exhaust gas passage 26 via the supply passage 240.

The pump 220 is an electric pump and supplies the urea solution from the tank 210 to the urea adding valve 230 at the time of forward rotation. On the other hand, the pump 220 supplies the urea solution from the urea adding valve 230 to the tank 210 at the time of reverse rotation. That is, the urea solution is recovered and returned from the urea adding valve 230 and the supply passage 240 to the tank 210 at the time of reverse rotation of the pump 220.

A dispersing plate 60 that promoting atomization of the urea solution by dispersing the urea solution injected from the urea adding valve 230 is disposed in the exhaust gas passage 26 between the urea adding valve 230 and the SCR catalyst 41.

The urea solution injected from the urea adding valve 230 is hydrolyzed into ammonia by heat of the exhaust gas. The ammonia is supplied as the reductant of NOx to the SCR catalyst 41. The ammonia supplied to the SCR catalyst 41 is adsorbed by the SCR catalyst 41 and is used to reduce NOx.

In addition, the engine 1 is provided with an exhaust gas recirculation device (hereinafter, referred to as EGR device). By performing an exhaust gas recirculation process (hereinafter, referred to as EGR process) of introducing a part of the exhaust gas into the intake air using the EGR device, the combustion temperature in the cylinders decreases and the amount of NOx generated decreases. The EGR device includes an EGR passage 13 that causes the intake air passage 3 and the exhaust manifold 8 to communicate with each other, an EGR valve 15 that is disposed in the EGR passage 13, and an EGR cooler 14. By adjusting the opening of the EGR valve 15, an amount of exhaust gas circulating, that is, a so-called external EGR volume, that is introduced from the exhaust gas passage 26 to the intake air passage 3 is adjusted. The temperature of the exhaust gas flowing in the EGR passage 13 is lowered by the EGR cooler 14.

The engine 1 is provided with various sensors for detecting an engine operation state. For example, an air flowmeter 19 detects an amount of intake air GA. A throttle valve opening sensor 20 detects an opening of an intake throttle valve 16. An engine rotation speed sensor 21 detects the rotation speed of a crank shaft, that is, the engine rotation speed NE. An accelerator sensor 22 detects a pressure applied to an accelerator pedal, that is, an accelerator pressure ACCP. An external air temperature sensor 23 detects an external air temperature THout. A vehicle speed sensor 24 detects a vehicle speed SPD of a vehicle having the engine 1 mounted thereon. A water temperature sensor 25 detects a coolant temperature THW of the engine 1.

A first exhaust gas temperature sensor 100 disposed upstream of the oxidation catalyst 31 detects a first exhaust gas temperature TH1 that is the exhaust gas temperature before the exhaust gas flows in the oxidation catalyst 31. A differential pressure sensor 110 detects a pressure difference ΔP in exhaust gas pressure between the upstream and the downstream of the filter 32.

In the exhaust gas passage 26 between the first purification member 30 and the second purification member 40, a second exhaust gas temperature sensor 120 and a first NOx sensor 130 are disposed upstream of the urea adding valve 230. The second exhaust gas temperature sensor 120 detects a second exhaust gas temperature TH2 that is the exhaust gas temperature before the exhaust gas flows in a SCR catalyst 41. The first NOx sensor 130 detects an amount of NOx contained in the exhaust gas before the exhaust gas flows in the SCR catalyst 41, more specifically, a first NOx concentration N1 as the concentration of NOx (in a unit of ppm).

The exhaust gas passage 26 downstream of the third purification member 50 is provided with a second NOx sensor 140 that detects a second NOx concentration N2 as the concentration of NOx in the exhaust gas purified by the SCR catalyst 41.

The outputs of these sensors and the like are input to a controller 80 that configures a control unit. The controller 80 is mainly constituted by a microcomputer including a central processing unit (CPU), a read only memory (ROM) that stores various programs or maps, a random access memory (RAM) that temporarily stores computation results of the CPU and the like, a timer counter, an input interface, and an output interface.

Various controls of the engine 1 such as a fuel injection control of the fuel injection valves 4a to 4d or the fuel adding valve 5, an ejection pressure control of the supply pump 10, and a drive control of an actuator 17 that opens and closes the intake throttle valve 16 are performed by the controller 80.

Various exhaust gas controls such as the recycling process of combusting the PM captured by the filter 32 are performed by the controller 80. The controller 80 performs an EGR process using adjustment of the opening of the EGR valve 15 as one of such exhaust gas controls.

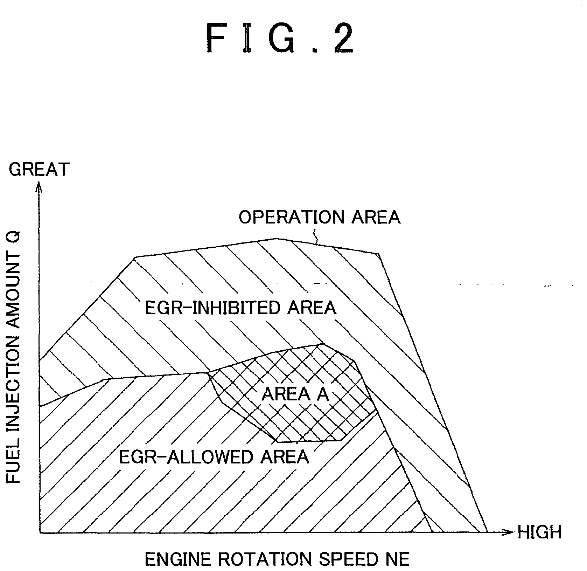

As illustrated in FIG. 2, in the entire operation area of the engine 1, a high-rotation area in which the engine rotation speed NE is high or a high load range in which the amount of fuel injected Q from the fuel injection valves is large are set as an EGR-inhibited area in which the performing of the EGR process is inhibited. This is because the ratio of new air in the amount of intake air suctioned into the combustion chamber decreases by performing the EGR process and thus the performing of the EGR process is inhibited in the high-rotation area or the high load range in which the amount of new air requested increases. In the operation area of the engine 1, the area other than the EGR-inhibited area is set as an EGR-allowed area in which the EGR process is performed.

In the EGR-allowed area, a target EGR volume Ep is set on the basis of the engine rotation speed NE, the amount of fuel injected Q, the amount of intake air GA, and the like. By adjusting the opening of the EGR valve 15 depending on the target EGR volume Ep, the amount of NOx generated is suitably decreased to an appropriate state corresponding to the engine operation state. By setting the opening of the EGR valve 15 to be larger as the value of the target EGR volume Ep becomes larger, the amount of exhaust gas returned to the combustion chambers increases. As the amount of exhaust gas returned to the combustion chambers increases, the combustion temperature of the fuel-air mixture in the cylinders decreases and the amount of NOx generated decreases.

The controller 80 performs a control of adding the urea solution through the use of the urea adding valve 230 as one of the exhaust gas controls. In the addition control, an amount of urea added QE is calculated by an equivalent ratio control of adjusting the amount of urea solution added depending on the amount of NOx in the exhaust gas.

In the equivalent ratio control, a target equivalent ratio TT based on the amount intake air GA and the second exhaust gas temperature TH2 is calculated by the controller 80. The target equivalent ratio TT is an amount of urea solution added just enough to reduce NOx and is an amount of urea solution required per unit concentration of NOx (for example, an amount of urea solution required for completely reducing 1 ppm of NOx). The larger the amount of intake air GA becomes (that is, the larger the amount of exhaust gas flowing) or the higher the second exhaust gas temperature TH2 becomes, the larger the amount of urea solution required per unit concentration of NOx tends to become. Accordingly, the target equivalent ratio TT is variably set so that the larger the amount of intake air GA becomes or the higher the second exhaust gas temperature TH2 becomes, the larger the target equivalent ratio TT becomes. By multiplying the target equivalent ratio TT by a first NOx concentration N1, the amount of urea added QE corresponding to the current amount of NOx generated is calculated. By calculating the amount of urea added QE in this way, the higher the first NOx concentration N1 becomes, that is, the larger the amount of NOx discharged from the combustion chambers of the engine 1 becomes, the larger the amount of urea added QE becomes.

The engine load becomes relatively high at the time of the high-speed travelling of a vehicle, and thus the amount of NOx generated increases. The engine 1 is provided with the EGR device, and thus it is possible to decrease the amount of NOx generated in the combustion chamber by performing the EGR process. However, at the time of the high-speed travelling of a vehicle, the engine load falls into a middle load range or a high load range (the area A in FIG 2), and thus the amount of new air requested in the combustion chamber increases. At this time of the high-speed travelling of a vehicle, the amount of exhaust gas that can be introduced by the EGR process is limited, and it is difficult to introduce much exhaust gas. When a vehicle performs a high-speed travelling, the amount of NOx generated increases to a certain extent even after the performing of the EGR process, and the amount of urea solution added that is adjusted by the equivalent ratio control also increases. When the amount of urea solution added increases in this way, the accumulated amount of urea solution added as a accumulated value of the amount of the urea solution added increases within the predetermined period, and the deposit of the urea solution becomes likely to be generated in the vicinity of the injection hole in the urea adding valve 230.

In the exemplary embodiment, when a period during which the vehicle speed falls into a high-speed state of a predetermined value or more during the performing of the EGR process continues for a predetermined period or longer, by performing the process of decreasing the amount of urea solution added to be smaller than an amount of urea solution added that is calculated by the equivalent ratio control, the generation of the deposit in the urea adding valve 230 is suppressed.

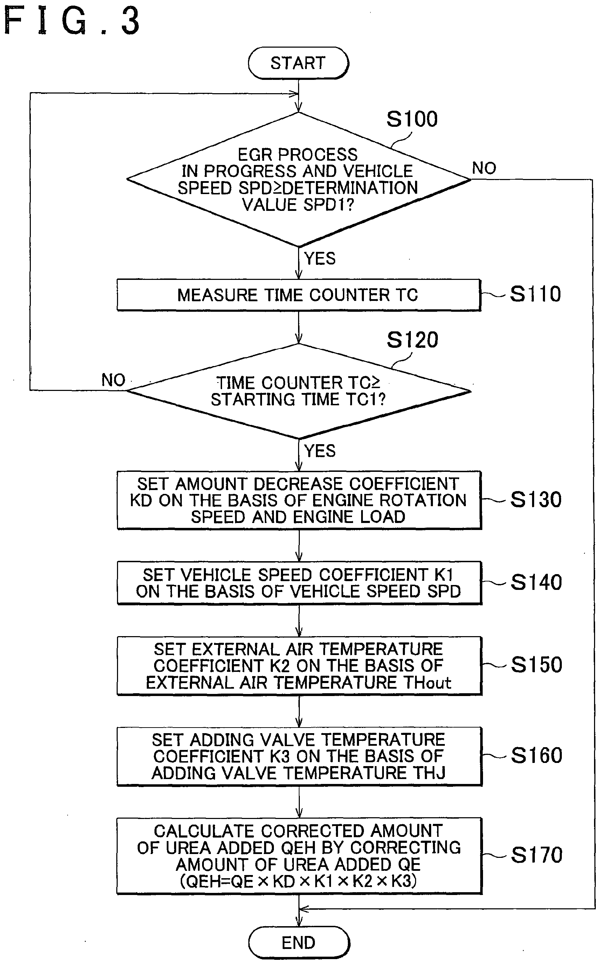

FIG 3 illustrates a series of a process flow for performing the process of decreasing the amount. The process flow is repeatedly performed by the controller 80 every predetermined cycle. As illustrated in FIG 3, when the present process is started, the controller 80 determines whether or not the EGR process is in progress and the vehicle speed SPD is equal to or more than a determination value SPD1 (S100). As the determination value SPD1, a vehicle speed (for example, approximately 100 km/h to 120 km/h) at which the generation of the above-described deposit by an increase in the amount of urea solution added accompanied by an increase in the amount of NOx generated is concerned is set.

When the EGR process is inhibited or the vehicle speed SPD fails to satisfy the determination value SPD1 (S100: NO), the controller 80 temporarily finishes the present process. When the EGR process is in progress and the vehicle speed SPD is equal to or more than the determination value SPD1 (S100: YES), the controller 80 measures a time counter TC (S110). The time counter TC is a value indicating a continuous time during which the vehicle speed SPD falls into a high-speed state of the determination value SPD1 or more during the performing of the EGR process.

The controller 80 determines whether or not the current time counter TC is equal to or more than a starting time TC1 (S120). This starting time TC1 is a fixed value, and is a time required for the accumulated value of the amount of urea added QE to increase so that the generation of the deposit in the urea adding valve 230 is concerned in a state in which the determination conditions of Step S100 are satisfied, and an appropriate value obtained by previous experiments is set.

When the time counter TC is less than the starting time TC1 (S120: NO), the controller 80 repeats individual processes of Steps S100 to Step S120 until the time counter TC reaches the starting time TC1 or more.

When the time counter TC is equal to or more than the starting time TC1 (S120: YES), the controller 80 performs processes of Step S130 and thereafter to perform the above-described process of decreasing the amount.

In Step S130, the controller 80 sets a decrease coefficient KD on the basis of an engine load KL and an engine rotation speed NE indicated by the amounts of fuel injected Q of the fuel injection valves 4a to 4d (S130).

The decrease coefficient KD is a basic value of a multiplication coefficient for performing a correction of decreasing the amount of urea added QE calculated by the equivalent ratio control, and is variably set in a range of more than '0' to less than '1'.

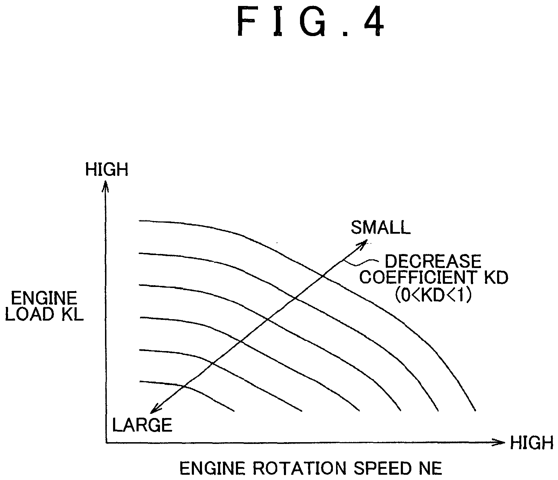

As illustrated in FIG 4, as the engine rotation speed NE increases, and the amount of NOx generated within the predetermined period increases, the value of the decrease coefficient KD decreases. As the engine load KL becomes higher (as the amount of fuel injected Q increases), and the amount of NOx generated per unit hour increases, the value of the decrease coefficient KD increases. As the value of the decrease coefficient KD decreases, the corrected amount of urea added QE decreases compared with the amount before correction. In other words, the smaller the value of the decrease coefficient KD becomes, the greater the decrease correction amount of the amount of urea added QE becomes.

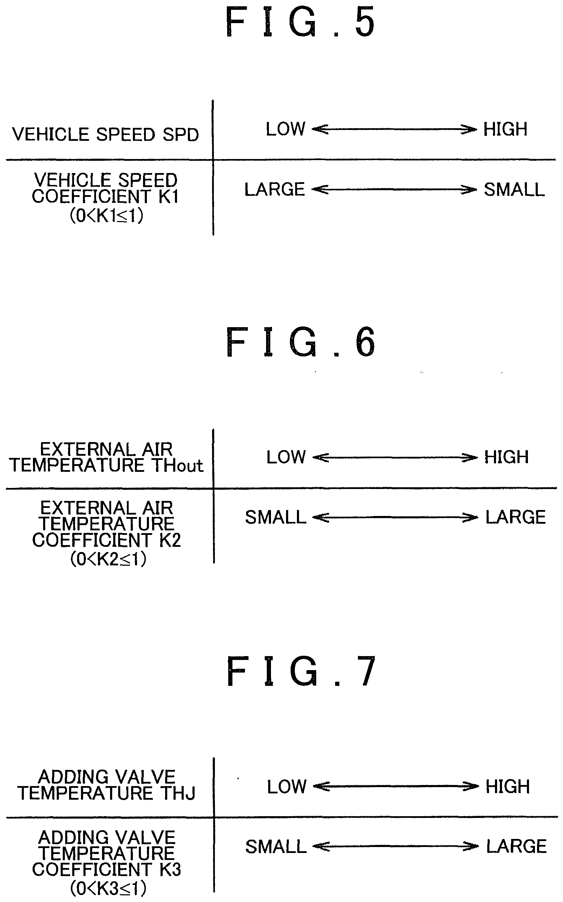

Next, the controller 80 sets a vehicle speed coefficient K1 on the basis of the vehicle speed SPD (S140). FIG. 5 illustrates an aspect of setting the vehicle speed coefficient K1. The vehicle speed coefficient K1 is also the multiplication coefficient for performing the correction of decreasing the amount of urea added QE calculated by the equivalent ratio control, and is variably set in a range of more than '0' to less than '1'. As the vehicle speed SPD increases, the value of the vehicle speed coefficient K1 decreases. As the value of the vehicle speed coefficient K1 decreases, the corrected amount of urea added QE deceases with the amount before correction. In other words, the smaller the value of the vehicle speed coefficient K1 becomes, the greater the decrease correction amount of the amount of urea added QE becomes.

Next, the controller 80 sets an external air temperature coefficient K2 on the basis of the external air temperature THout (S150). FIG. 6 illustrates an aspect of setting the external air temperature coefficient K2. The external air temperature coefficient K2 is also the multiplication coefficient for performing the correction of decreasing the amount of urea added QE calculated by the equivalent ratio control, and is variably set in a range of more than '0' to less than '1'. As the external air temperature THout becomes higher, the value of the external air temperature coefficient K2 becomes greater. As the value of the external air temperature coefficient K2 decreases, the corrected amount of urea added QE decreases compared with the amount before correction. In other words, the smaller the value of the external air temperature coefficient K2 becomes, the greater the decrease correction amount of the amount of urea added QE becomes.

Next, the controller 80 sets an adding valve temperature coefficient K3 on the basis of an adding valve temperature THJ (S160). The adding valve temperature THJ is a front end temperature of the urea adding valve 230. This front end temperature can also be detected by a sensor or the like, in the exemplary embodiment, the adding valve temperature THJ is estimated on the basis of various parameters, for example, the second exhaust gas temperature TH2 representing the exhaust gas temperature adjacent to the urea adding valve 230, an exhaust gas flow rate GS, the external air temperature THout, and the vehicle speed SPD. That is, as the second exhaust gas temperature TH2 becomes higher, the temperature of the front end of the urea adding valve 230 becomes higher, and thus as the second exhaust gas temperature TH2 becomes higher, the estimated value of the adding valve temperature THJ increases. As the exhaust gas flow rate GS increases, the amount of heat moving from the exhaust gas to the front end of the urea adding valve 230 increases, and thus as the exhaust gas flow rate GS becomes greater, the estimated value of the adding valve temperature THJ becomes higher. As the external gas temperature THout becomes higher, the temperature of the urea adding valve 230 becomes higher, and thus as the external gas temperature THout becomes higher, the estimated value of the adding valve temperature THJ increases. As the vehicle speed SPD decreases, an effect that cools the urea adding valve 230 by travelling-caused wind is degraded, and thus as the vehicle speed SPD decreases, the estimated value of the adding valve temperature THJ increases.

FIG. 7 illustrates an aspect of setting the adding valve temperature coefficient K3. The adding valve temperature coefficient K3 is also the multiplication coefficient for performing the correction of decreasing the amount of urea added QE calculated by the equivalent ratio control, and is variably set in a range of more than '0' to less than '1'. As the adding valve temperature THJ becomes higher, the value of the adding valve temperature coefficient K3 increases. As the adding valve temperature coefficient K3 becomes smaller, the corrected amount of urea added QE becomes smaller compared with the amount before correction. In other words, as the smaller the value of the adding valve temperature coefficient K3 becomes, the greater the decrease correction amount of the amount of urea added QE becomes.

Next, the controller 80 calculates the corrected amount of urea added QEH by correcting the amount of urea added QE on the basis of the following formula (1) (S170), and temporarily finishes the present process. QEH=QE×KD×K1×K2×K3 ... (1) QEH: the corrected amount of urea added, QE: the amount of urea added that is calculated by the equivalent ratio control, KD: the decrease coefficient, K1: the vehicle speed coefficient, K2: the external gas temperature coefficient, K3: the adding valve temperature coefficient. When the corrected amount of urea added QEH is calculated in this way, the controller 80 controls the driving of the urea adding valve 230 so that an amount of the urea solution that corresponds to the corrected amount of urea added QEH is added from the urea adding valve 230.

Next, the action of the exemplary embodiment will be described. By measuring the time counter TC, the continuous time during which the vehicle speed SPD falls into a high-speed state of the determination value SPD1 or more during the performing of the EGR process is measured. When the time counter TC as the measured continuous time reaches the starting time TC1 or more (Step S120: YES in FIG. 3), the period during which the vehicle speed SPD falls into a high-speed state of the determination value SPD1 and the performing of the EGR process continues for a predetermined period or longer, and thus the process of decreasing the amount from Step S130 to Step S170 is performed. When the process of decreasing the amount is performed, by calculating the corrected amount of urea added QEH obtained by the correction of decreasing the amount of urea added QE using various coefficients (Step S170 in FIG 3), the amount of urea solution added becomes smaller than the amount of urea added QE that is set by the equivalent ratio control. In a state in which the vehicle speed SPD is a high-speed state of the determination value SPD1 during the performing of the EGR process and the amount of NOx generated becomes likely to increase, the amount of urea solution added decreases, and thus an increase in the accumulated amount of urea solution added is suppressed, and the generation of the deposit in the urea adding valve 230 is suppressed. Therefore, it also becomes possible to suppress an increase in the amount of urea solution consumed.

When urea is added by the equivalent ratio control in a status in which the amount of NOx generated is great, the amount of urea solution consumed increases; however, according to the exemplary embodiment, in this status, the amount of urea solution added is decreased more than the amount of urea solution added that is set by the equivalent ratio control.

When the decrease amount of the amount of urea added by the process of decreasing the amount is set to increase as the amount of NOx generated in the engine 1 increases and the amount of urea added QE that is calculated by the equivalent ratio control increases, the decrease amount of the amount of urea solution added increases as the accumulated amount of urea solution added becomes more likely to increase, and thus it becomes possible to suitably suppress the generation of the deposit accompanied by an increase in the accumulated amount of urea solution added.

As the engine rotation speed NE increases, the amount of NOx generated tends to increase, and as the engine load KL becomes higher, the amount of NOx generated tends to increase. As illustrated in FIG. 4, as the engine rotation speed NE increases or the engine load KL becomes higher, the decrease coefficient KD decreases, and thus the decrease correction amount decreases when the correction of decreasing the amount of urea added QE is performed by the decrease coefficient KD. Therefore, it becomes possible to set the decrease amount depending on the amount of NOx generated.

As the vehicle speed SPD increases, the amount of NOx generated tends to increase, and thus, as illustrated in FIG 5, as the vehicle speed SPD increases, the vehicle speed coefficient K1 is set to be smaller, whereby the decrease amount correction amount is set to increase when the correction of decreasing the amount of urea added QE is performed by the vehicle speed coefficient K1. Therefore, it becomes possible to set the decrease amount depending on the amount of NOx generated in this way.

When the decrease amount of the amount of urea added by the process of decreasing the amount is set to increase as the gasification amount of the urea solution attached to the urea adding valve 230 decreases and the generation of the deposit of the urea solution in the urea adding valve 230 becomes more likely, it becomes possible to appropriately set the decrease amount of the amount of urea added QE depending on the likelihood of the generation of the deposit.

As the external air temperature THout decreases, the exhaust gas temperature tends to decrease, and thus the gasification amount of the urea solution attached to the urea adding valve 230 decreases as the external air temperature THout decreases. As illustrated in FIG. 6, when the external air temperature coefficient K2 is set to decrease as the external air temperature THout decreases, the decrease correction amount is set to increase when the correction of decreasing the amount of urea added QE is performed by the external air temperature coefficient K2. Therefore, it becomes possible to set the decrease amount depending on the gasification amount of the urea solution.

As the adding valve temperature THJ decreases, the gasification amount of the urea solution attached to the urea adding valve 230 decreases. As illustrated in FIG. 7, when the adding valve temperature coefficient K3 is set to decreases as the adding valve temperature THJ decreases, the decrease correction amount is set to increase when the correction of decreasing the amount of urea added QE is performed by the adding valve temperature coefficient K3. Therefore, it becomes possible to set the decrease amount depending on the gasification amount of the urea solution in this way.

As illustrated above, according to the exemplary embodiment, the following effects can be obtained.
(1) When the period during which the vehicle speed SPD falls into a high-speed state of the determination value SPD1 and during the performing of the EGR process continues for a predetermined period or longer, the process of decreasing the amount of urea solution added to be smaller than the amount of urea solution added that is set by the equivalent ratio control is performed. Therefore, it becomes possible to suppress the generation of the deposit in the urea adding valve 230.
(2) By performing the process of decreasing the amount, it is possible to suppress an increase in the amount of the urea solution consumed in a status in which the amount of NOx generated is great.
(3) The decrease amount of the amount of urea added QE by the process of decreasing the amount is set to increase as the gasification amount of the urea solution attached to the urea adding valve 230 decreases. Therefore, it is possible to appropriately set the decrease amount of the amount of urea added depending on the likelihood of the generation of the deposit.
(4) By variably setting the correction coefficient of the amount of urea added QE on the basis of the external air temperature THout and the adding valve temperature THJ, the decrease amount of the amount of urea added QE is changed. Therefore, it is possible to set the decrease amount of the amount of urea added QE depending on the gasification amount of the urea solution.
(5) The decrease amount of the amount of urea added QE by the process of decreasing the amount is increased as the amount of NOx generated in the engine 1 increases. Therefore, it is possible to suitably suppress the generation of the deposit accompanied by an increase in the accumulated amount of the amount of urea solution added.
(6) By variably setting the correction coefficient of the amount of urea added QE on the basis of the vehicle speed SPD, the engine rotation speed NE, and the engine load KL, the decrease amount of the amount of urea added QE is changed. Therefore, it is possible to set the decrease amount of the amount of urea added QE depending on the amount of NOx generated.

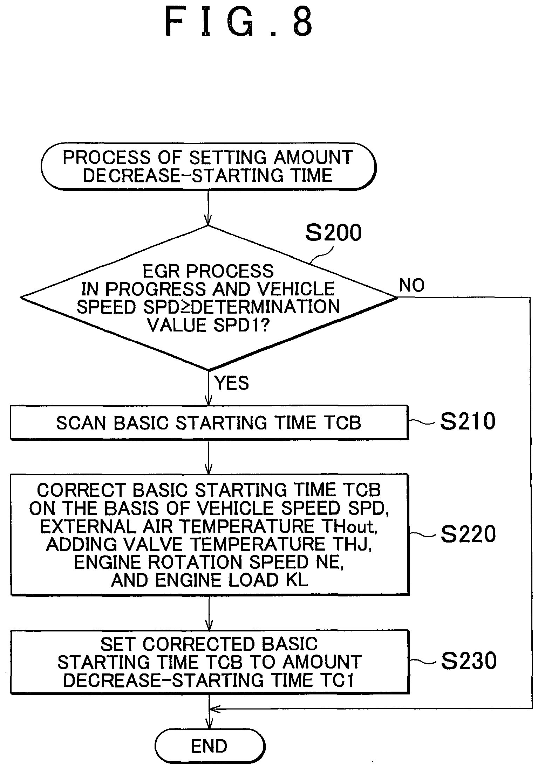

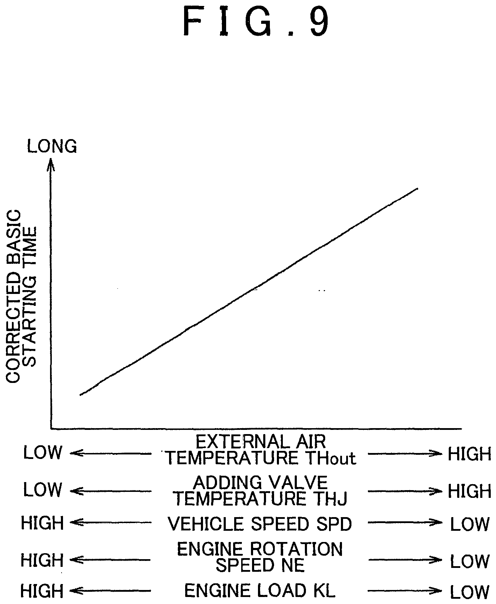

(Second Embodiment) Next, an exhaust gas control apparatus for an internal combustion engine according to a second embodiment will be described with reference to FIGS. 8 and 9.

In the first embodiment, the starting time TC1 is a fixed value; however, in the present exemplary embodiment, a process of variably setting the starting time TC1 is performed, which is the only difference from the first embodiment. Hereinafter, the exemplary embodiment will be described with a main focus on the difference from the first embodiment.

FIG 8 illustrates a process of setting the starting time TC1. The present process is repeatedly performed by the controller 80 every predetermined cycle. As illustrated in FIG. 8, when the present process is started, the controller 80 determines whether or not the EGR process is in progress and the vehicle speed SPD is equal to or more than the determination value SPD1 (S200). The process in Step S200 is the same as the process in Step S100.

When the negative determination comes out in Step S200, the controller 80 temporarily finishes the present process. When the positive determination comes out in Step S200, the controller 80 scans a basic starting time TCB (S210). The basic starting time TCB is a basic value of the starting time TC1, and an appropriate value obtained by previous experiments is set.

Next, the controller 80 corrects the basic starting time TCB on the basis of the respective parameters of the external air temperature THout, the adding valve temperature THJ, the vehicle speed SPD, the engine rotation speed NE, and the engine load KL (S220).

As illustrated in FIG. 9, the controller 80 corrects the basic starting time TCB so that, as the external air temperature THout decreases, a corrected basic starting time becomes shorter. The controller 80 corrects the basic starting time TCB so that, as the adding valve temperature THJ decreases, the corrected basic starting time becomes shorter. The controller 80 corrects the basic starting time TCB so that, as the vehicle speed SPD increases, the corrected basic starting time becomes shorter. The controller 80 corrects the basic starting time TCB so that, as the engine rotation speed NE increases, the corrected basic starting time becomes shorter. The controller 80 corrects the basic starting time TCB so that, as the engine load KL becomes higher, the corrected basic starting time becomes shorter. The correction of the basic starting time TCB by the respective parameters is performed by the setting of the correction coefficient depending on the respective parameters and the correction of the basic starting time TCB by the correction coefficient.

When the correction of the basic starting time TCB is performed on the basis of these parameters, the controller 80 sets the corrected basic starting time as the starting time TC1 (S230), and temporarily finishes the present process.

The controller 80 performs a series of the processes illustrated in FIG. 3 using the starting time TC1 set in the present process. Next, the specific actions obtained in the exemplary embodiment will be described.

When the starting timing of the process of decreasing the amount that performs a correction of decreasing the amount of the urea solution (the processes of Steps S130 to S170 in FIG. 3) is set to come earlier as the gasification amount of the urea solution attached to the urea adding valve 230 becomes smaller and the generation of the deposit of the urea solution in the urea adding valve 230 becomes more likely, the increase in the accumulated amount of urea solution added is suppressed earlier. Therefore, it becomes possible to appropriately set the starting timing of the process of decreasing the amount depending on the likelihood of the generation of the deposit.

As the external air temperature THout decreases, the exhaust gas temperature tends to decrease, and thus the gasification amount of the urea solution attached to the urea adding valve 230 becomes smaller as the external air temperature THout decreases. As illustrated in FIG. 9, the basic starting time TCB is corrected so that, as the external air temperature THout decreases, the corrected basic starting time becomes shorter. Therefore, the starting time TC1 is set depending on the gasification amount of the urea solution so that, as the gasification amount of the urea solution decreases and the generation of the deposit becomes more likely, the starting timing of the process of decreasing the amount comes earlier.

As the adding valve temperature THJ decreases, the gasification amount of the urea solution attached to the urea adding valve 230 becomes smaller. As illustrated in FIG 9, the basic starting time TCB is corrected so that, as the adding valve temperature THJ decreases, the corrected basic starting time becomes shorter. Therefore, the starting time TC1 is set in this way depending on the gasification amount of the urea solution so that, as the gasification amount of the urea solution decreases and the generation of the deposit becomes more likely, the starting timing of the process of decreasing the amount comes earlier.

When the starting timing of the process of decreasing the amount is set to come earlier as the amount of NOx generated in the engine 1 increases, and the amount of urea added that is calculated by the equivalent ratio control increases, that is, the accumulated amount of urea solution added becomes more likely to increase, an increase in the accumulated amount of urea solution added is suppressed earlier. Therefore, it becomes possible to suitably suppress the generation of the deposit accompanied by an increase in the accumulated amount of urea solution added.

As the vehicle speed SPD increases, the amount of NOx generated tends to increase, as the engine rotation speed NE increases, the amount of NOx generated tends to increase, and as the engine load KL becomes higher, the amount of NOx generated tends to increase. As illustrated in FIG. 9, the basic starting time TCB is corrected so that, as the vehicle speed SPD increases, the corrected basic starting time becomes shorter: The basic starting time TCB is corrected so that, as the engine rotation speed NE increases, the corrected basic starting time becomes shorter. The basic starting time TCB is corrected so that, as the engine load KL becomes higher, the corrected basic starting time becomes shorter. Therefore, the starting time TC1 is set depending on the amount of NOx generated so that, as the amount of NOx generated increases and the generation of the deposit becomes more likely, the starting timing of the process of decreasing the amount comes earlier.

As described above, according to the exemplary embodiment, in addition to the effects (1) to (6), the following effects can be further obtained. (7) The starting time TC1 is set to become shorter as the gasification amount of the urea solution attached to the urea adding valve 230 becomes smaller. Therefore, it is possible to appropriately set the starting timing of the process of decreasing the amount depending on the likelihood of the generation of the deposit.
(8) The basic starting time TCB is changed on the basis of the external air temperature THout and the adding valve temperature THJ. Therefore, it is possible to set the starting time TC1 depending on the gasification amount of the urea solution.
(9) The starting time TC1 is set to become shorter as the amount of NOx generated in the engine 1 increases. Therefore, it is possible to suitably suppress the generation of the deposit accompanied by an increase in the accumulated amount of urea solution added.
(10) The basic starting time TCB is changed on the basis of the vehicle speed SPD, the engine rotation speed NE, and the engine load KL. Therefore, it is possible to set the starting timing of the process of decreasing the amount depending on the amount of NOx generated.

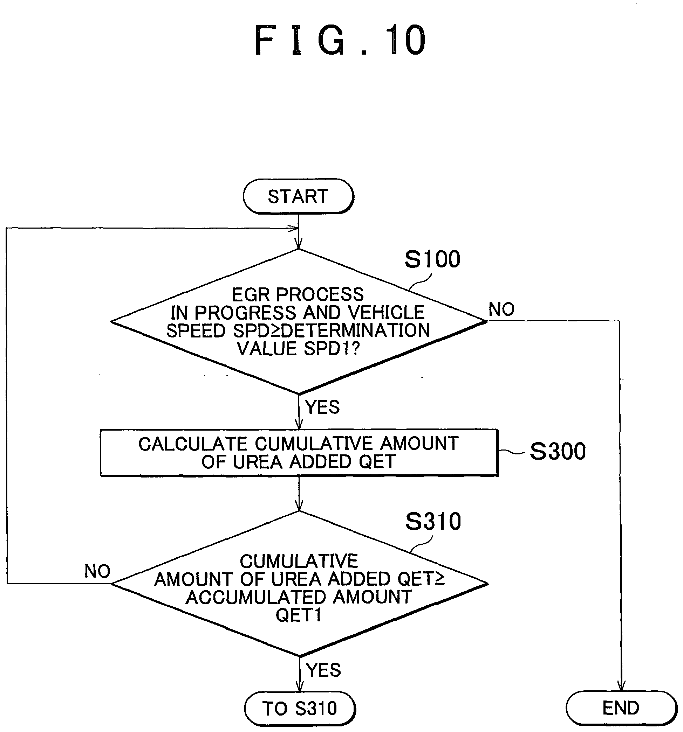

(Third Embodiment) Next, an exhaust gas control apparatus for an internal combustion engine according to a third embodiment will be described with reference to FIG. 10. In the first embodiment, the above-described time counter TC is measured to determine whether or not the period during which the vehicle speed SPD falls into a high-speed state of the determination value SPD1 and the EGR process is performed continues for a predetermined period or longer.

In the present exemplary embodiment, by calculating an accumulated amount QET of urea added as an accumulated value of the amount of urea added QE instead of by measuring the time counter TC, the same determination is performed. That is, the processes of Step S110 and Step S120 illustrated in FIG. 3 are not performed, and the processes of Step S300 and Step S310 illustrated in FIG. 10 are not performed.

As illustrated in FIG. 10, when the present process is started, the controller 80 determines whether or not the EGR process is in progress and the vehicle speed SPD is equal to or more than a determination value SPD1 (S100). The process of this Step S100 is the same as the process of the above-described Step S100.

When the negative determination comes out in Step S100, the controller 80 temporarily finishes the present process. When the positive determination comes out in Step S100, the controller 80 calculates the accumulated amount QET (S300). The accumulated amount QET is a time-integrated value of the amount of urea added QE when the vehicle speed SPD falls into a high-speed state of a determination value SPD1 during the performing of the EGR process.

Next, the controller 80 determines whether or not the accumulated amount QET of urea added at present is equal to or more than the accumulated amount QET1 or more (S310). The accumulated amount QET1 is a fixed value, and is an accumulated amount of the amount of urea added QE at which the generation of the deposit in the urea adding valve 230 is concerned, and an appropriate value obtained by previous experiments is set.

When the accumulated amount QET is less than the accumulated amount QET1 (S310: NO), the controller 80 sequentially repeats the respective processes of Step S100, Step S300, and Step S310 until the accumulated amount QET reaches the accumulated amount QET1 or more.

When the accumulated amount QET is equal to more than the accumulated amount QET1 (S310: YES), the controller 80 performs the processes of Step S130 and thereafter illustrated in FIG. 3 to perform the above-described process of decreasing the amount.

Next, the action of the exemplary embodiment will be described. When the accumulate amount QET calculated when the vehicle speed SPD falls into a high-speed state of the determination value SPD1 or more during the performing of the EGR process reaches the accumulated amount QET1 or more, the process of decreasing the above-described amount of urea added QE is started. Therefore, in the exemplary embodiment as well, when the period during which the vehicle speed SPD falls into a high-speed state of the determination value SPD1 and the EGR process is performed continues for a predetermined period or longer, the process of decreasing the amount is started.

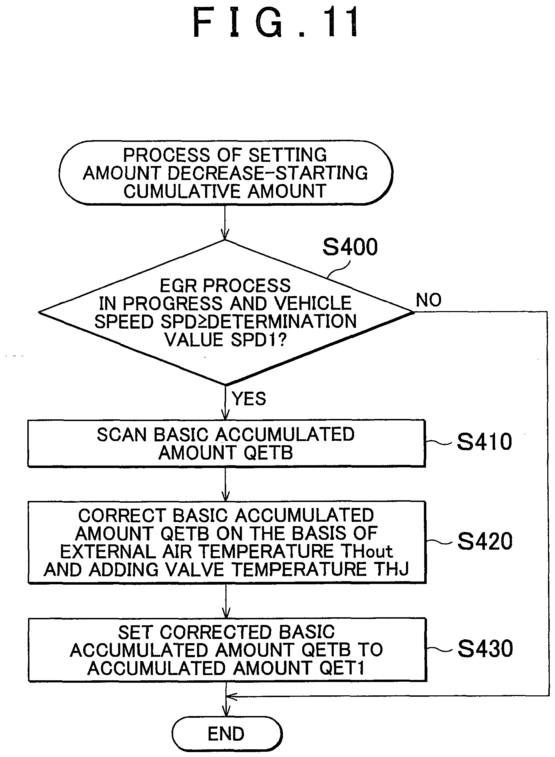

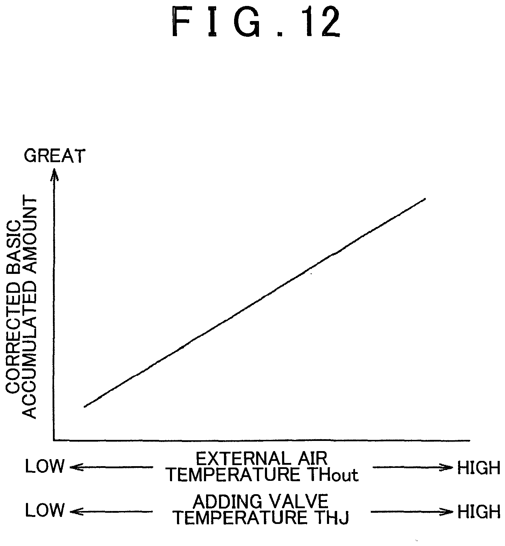

As described above, in the exemplary embodiment as well, the effects (1) to (6) of the first embodiment can be obtained. (Fourth Embodiment) Next, an exhaust gas control apparatus for an internal combustion engine according to a fourth embodiment will be described with reference to FIGS. 11 and 12.

In the third embodiment, the accumulated amount QET1 is a fixed value; however, in the present exemplary embodiment, a process of variably setting the accumulated amount QET1 is performed, which is the only difference from the third embodiment. Hereinafter, the exemplary embodiment will be described with a main focus on the difference from the third embodiment.

FIG 11 illustrates a process of setting the accumulated amount QET1. The present process is repeatedly performed by the controller 80 every predetermined cycle. As illustrated in FIG 11, when the present process is started, the controller 80 determines whether or not the EGR process is in progress and the vehicle speed SPD is equal to or more than a determination value SPD1 (S400). The process in Step S400 is the same as the process in Step S100.

When the negative determination comes out in Step S400, the controller 80 temporarily finishes the present process. When the positive determination comes out in Step S400, the controller 80 scans a basic accumulated amount QETB (S410). The basic accumulate amount QETB is a basic value of the accumulated amount QET1, and an appropriate value obtained by previous experiments is set.

Next, the controller 80 corrects the basic accumulated amount QETB on the basis of the respective parameters of the external air temperature THout and the adding valve temperature THJ (S420). As illustrated in FIG. 12, the controller 80 corrects the basic accumulated amount QETB so that, as the external air temperature THout decreases, a corrected basic accumulated amount QETB decreases. The controller 80 corrects the basic accumulated amount QETB so that, as the adding valve temperature THJ decreases, the corrected basic accumulated amount decreases. The correction of the basic accumulated amount QETB by the respective parameters is performed by the setting of the correction coefficient depending on the respective parameters and the correction of the basic accumulated amount QETB by the same correction coefficient.

When the correction of the basic accumulated amount QETB is performed on the basis of these parameters, the controller 80 sets the corrected basic accumulated amount as the accumulated amount QET1 (S430), and temporarily finishes the present process.

The controller 80 performs a series of the processes illustrated in FIG 10 using the accumulated amount QET1 set in the present process. Next, the specific actions obtained in the exemplary embodiment will be described.

When the starting timing of the process of decreasing the amount that performs the correction of decreasing the amount of the urea solution (the processes of Steps S130 to S170 in FIG. 3) is set to come earlier as the gasification amount of the urea solution attached to the urea adding valve 230 becomes smaller and the generation of the deposit of the urea solution in the urea adding valve 230 becomes more likely, the increase in the accumulated amount of urea solution added is suppressed earlier. Therefore, it becomes possible to appropriately set the starting timing of the process of decreasing the amount depending on the likelihood of the generation of the deposit.

As the external air temperature THout decreases, the exhaust gas temperature tends to decrease, and thus the gasification amount of the urea solution attached to the urea adding valve 230 becomes smaller as the external air temperature THout decreases. As the adding valve temperature THJ decreases, the gasification amount of the urea solution attached to the urea adding valve 230 becomes smaller. As illustrated in FIG. 12, the basic accumulated amount QETB is corrected so that, as the external air temperature THout decreases or the adding valve temperature THJ decreases, the corrected basic accumulated amount becomes shorter. Therefore, as the gasification amount of the urea solution decreases and the generation of the deposit becomes more likely, the timing at which the positive determination comes out in Step S310 illustrated in FIG. 10 comes earlier. That is, the correction of decreasing the basic accumulated amount QETB obtains the same action as the correction of shortening the basic starting time TCB in the second embodiment.

The accumulated amount QET1 is set depending on the gasification amount of the urea solution so that the starting timing of the process of decreasing the amount comes earlier in this way. As described above, according to the exemplary embodiment, in addition to the effects by the third embodiment, the same effects as (7) and (8) of the second embodiment can be obtained.

(Fifth Embodiment) When the amount of urea solution added is decreased by performing the above-described process of decreasing the amount, the amount of ammonia adsorbed by the SCR catalyst 41 becomes insufficient, and there is a concern that the NOx purification rate may decrease. In the present exemplary embodiment, when the amount of ammonia adsorbed NHR by the SCR catalyst 41 becomes equal to or less than a predetermined value, the amount of urea solution added is adjusted so that the amount of ammonia adsorbed NHR increases even during the performing of the above-described process of decreasing the amount.

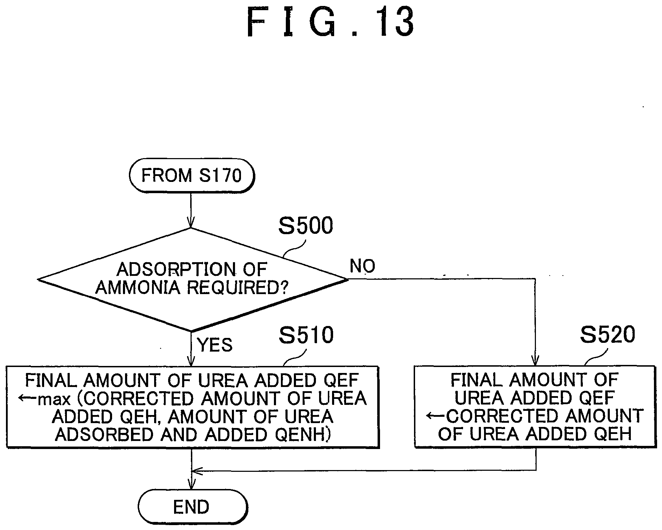

The exemplary embodiment is performed by adding processes of Step S500 to Step S520 illustrated in FIG. 13 after the process of Step S170 described in the first embodiment. That is, after the corrected amount of urea added QEH is calculated in Step S170 illustrated in FIG. 3, the controller 80 performs the processes of Step S500 and thereafter illustrated in FIG. 13.

In Step S500 illustrated in FIG. 13, the controller 80 determines whether or not the adsorption of ammonia is required (S500). In Step S500, when the amount of ammonia adsorbed NHR by the SCR catalyst 41 becomes equal to or less than a predetermined lower limit value, it is determined that the adsorption of ammonia is required. The amount of ammonia adsorbed NHR is calculated using an appropriate method. For example, the amount of ammonia adsorbed NHR is calculated on the basis of parameters relating to the amount of ammonia adsorbed NHR such as the amount of urea solution added, the exhaust gas temperature, and the exhaust gas flow rate. As the above-described lower limit value, the minimum value of the amount of ammonia adsorbed required to appropriately perform the reduction of NOx is set in advance.

When the adsorption of ammonia is not required, that is, when the amount of ammonia adsorbed NHR exceeds the lower limit value (S500: NO), the controller 80 sets the corrected amount of urea added QEH calculated in Step S170 as a final amount of urea added QEF (S520), and temporarily finishes the present process.

When the adsorption of ammonia is required, that is, when the amount of ammonia adsorbed NHR is equal to or less than the lower limit value (S500: YES), the controller 80 sets the larger value of the corrected amount of urea added QEH calculated in Step S170 and the amount of urea adsorbed and added QENH as the final amount of urea added QEF (S510), and temporarily finishes the present process. The amount of urea adsorbed and added QENH is an amount of urea solution added required to increase the amount of ammonia adsorbed NHR that has becomes equal to or less than the lower limit value to a specified amount of ammonia adsorbed, and is calculated on the basis of, for example, the current lacking amount of the amount of ammonia adsorbed NHR with respect to the specified amount of ammonia adsorbed or the exhaust gas temperature having an effect on the amount of ammonia adsorbed NHR.

When the final amount of urea added QEF is set in this way, the controller 80 controls the driving of the urea adding valve 230 so that an amount of urea solution corresponding to the final amount of urea added QEF is added from the urea adding valve 230.

Next, the specific actions obtained by the exemplary embodiment will be described. When the adsorption of ammonia is not required, the corrected amount of urea added QEH calculated in Step S170 is set as the final amount of urea added QEF. In this case, the same action and effect as in the first embodiment can be obtained.

When the adsorption of ammonia is required, the larger value of the corrected amount of urea added QEH calculated in Step S170 and the amount of urea adsorbed and added QENH is set as the final amount of urea added QEF. The amount of urea added QE is controlled by a final upper limit amount of urea added QEMAXF set in this way (S510). Therefore, in Step S510, in a case in which the amount of urea adsorbed and added QENH is set as the final amount of urea added QEF, at least an amount of urea solution corresponding to the amount of urea adsorbed and added QENH is added. Therefore, the amount of ammonia adsorbed NHR increases, and reaches the specified amount of ammonia adsorbed.

In Step S510, in a case in which the corrected amount of urea added QEH is set as the final amount of urea added QEF, the final amount of urea added QEF becomes greater than at least the amount of urea adsorbed and added QENH. Therefore, at least an amount of urea solution that is equal to or more than at least the amount of urea adsorbed and added QENH is added. Therefore, the amount of ammonia adsorbed NHR increases, and reaches the specified amount of ammonia adsorbed.

The process of decreasing the amount of the exemplary embodiment can also be applied to the second embodiment, the third embodiment, and the fourth embodiment. As described above, according to the exemplary embodiment, in addition to the effects (1) to (6) according to the first embodiment, the following effects can be further obtained.

(11) When the amount of ammonia adsorbed NHR is equal to or less than the predetermined lower limit value, the amount of urea solution added is adjusted so that the amount of ammonia adsorbed NHR increases during the performing of the above-described process of decreasing the amount. Therefore, the amount of ammonia adsorbed by the SCR catalyst 41 is prioritized rather than the decrease in the amount of urea solution added by the process of decreasing the amount, and thus it is possible to suppress a decrease in the NOx purification rate caused by the lacking of the amount of ammonia adsorbed NHR.

The above-described respective exemplary embodiments can also be performed in different manners as described below. The front end temperature of the urea adding valve 230 is estimated as the adding valve temperature THJ. However, the temperatures at a part other than the urea adding valve 230 and the front end temperature have a correlation with each other, and thus, instead of the front end temperature, the temperature at a part other than the urea adding valve 230 may be estimated or detected.

As the correction coefficient for decreasing the amount of urea added QE, the decrease coefficient KD, the vehicle speed coefficient K1, the external air temperature coefficient K2, and the adding valve coefficient K3 are set, but any of these parameters may not be used as appropriate. For example, the decrease coefficient KD may not be set, the vehicle speed coefficient K1 may not be set, the external air temperature coefficient K2 may not be set, or the adding valve coefficient K3 may not be set. In addition, the number of unused parameters is not limited to one, and may be plural.

In the respective exemplary embodiments, the decrease correction amount of the amount of urea added QE is variably set using various correction coefficients. Additionally, this decrease correction amount may be, more simply, set as a fixed value. For example, the corrected amount of urea added QEH may be calculated by setting the above-described decrease coefficient KD to a fixed value, and multiplying the decrease coefficient KD by the amount of urea added QE. Even in this case, the corrected amount of urea added QEH decreases to be smaller than the amount of urea added QE set by the equivalent ratio control, and thus at least the effects described in the above-described (1) and (2) can be obtained.

In the second embodiment, the basic starting time TCB is corrected on the basis of various parameters such as the external air temperature THout, the adding valve temperature THJ, the vehicle speed SPD, the engine rotation speed NE, and the engine load KL, but any of these parameters may not be used as appropriate. For example, the correction on the basis of the external air temperature THout may not be performed, the correction on the basis of the adding valve temperature THJ may not be performed, the correction on the basis of the vehicle speed SPD may not be performed, the correction on the basis of the engine rotation speed NE may not be performed, or the correction on the basis of the engine load KL may not be performed. In addition, the number of unused parameters is not limited to one, and may be plural.

In the fourth embodiment, the basic accumulated amount QETB is corrected on the basis of various parameters such as the external air temperature THout and the adding valve temperature THJ, but any one of these parameters may not be used as appropriate. For example, the correction on the basis of the external air temperature THout may not be performed, or the correction on the basis of the adding valve temperature THJ may not be performed.

In the fifth embodiment, to increase the amount of ammonia adsorbed NHR, the larger value of the corrected amount of urea added QEH calculated in Step S170 and the amount of urea adsorbed and added QENH is set as the final amount of urea added QEF, but the amount of ammonia adsorbed NHR may be increased using another aspect. For example, when the amount of ammonia adsorbed NHR is equal to or less than the predetermined lower limit value, the decrease in the amount of urea added by the above-described process of decreasing the amount may be inhibited. In this case, compared with a case in which the amount of urea added is decreased by the process of decreasing the amount, the amount of urea added increases, and thus the amount of ammonia adsorbed NHR increases. Therefore, in this modified example as well, it becomes possible to suppress a decrease in the NOx purification rate caused by the lacking of the amount of ammonia adsorbed NHR.

To determine whether or not the period during which the vehicle speed SPD falls into a high-speed state of the determination value and the EGR process is performed continues for a predetermined period or longer, the above-described time counter TC is measured, or the accumulated amount QET of urea added is calculated, but the above-described fact may be determined using other aspects. For example, it is possible to calculate the travelling distance when the EGR process is in progress and the vehicle speed SPD becomes equal to or less than the determination value SPD1, and perform the above-described process of decreasing the amount (the process from Step S130 to S170 in FIG. 3) when the calculated travelling distance reaches a predetermined value or more.

While the urea solution is used as the reductant, other reductants may be used.

## Claims

1. An exhaust gas control apparatus for an internal combustion engine for a vehicle, the exhaust gas control apparatus comprising:
an adding valve (230) that adds a reductant to an exhaust gas passage;
a catalyst (41) that purifies NOx in exhaust gas by an added reductant;
an exhaust gas recirculation device (13, 14, 15) configured to perform an exhaust gas recirculation control to introduce a part of the exhaust gas into intake air; and
a control unit (80) configured to perform an equivalent ratio control to adjust an amount of the added reductant depending on an amount of NOx in the exhaust gas,
the control unit (80) **characterized in that** it is configured to perform a decrease control to decrease the amount of the added reductant to be smaller than the amount of the added reductant that is set by the equivalent ratio control when a period that a vehicle speed is equal to or higher than a predetermined value while the exhaust gas recirculation control is performed continues for a predetermined period or longer.

2. The exhaust gas control apparatus according to claim 1,
wherein the control unit (80) is configured to decrease the amount of the added reductant as an amount of a gasification of the reductant attached to the adding valve (230) decreases.

3. The exhaust gas control apparatus according to claim 2,
wherein the control unit (80) is configured to change the amount of the added reductant based on at least one of an external air temperature and a temperature of the adding valve (230).

4. The exhaust gas control apparatus according to any one of claims 1 to 3,
wherein the control unit (80) is configured to decrease the amount of the added reductant as an amount of the NOx generated in the internal combustion engine increases.

5. The exhaust gas control apparatus according to claim 4,
wherein the control unit (80) is configured to change the amount of the added reductant based on at least one of a vehicle speed, an engine rotation speed, and an engine load.

6. The exhaust gas control apparatus according to any one of claims 1 to 5,
wherein the control unit (80) is configured to shorten the predetermined period as an amount of a gasification of the reductant attached to the adding valve (230) decreases.

7. The exhaust gas control apparatus according to claim 6,
wherein the control unit (80) is configured to change the predetermined period based on at least one of an external air temperature and a temperature of the adding valve (230).

8. The exhaust gas control apparatus according to any one of claims 1 to 7,
wherein the control unit (80) is configured to shorten the predetermined period as an amount of NOx generated in the internal combustion engine increases.

9. The exhaust gas control apparatus according to claim 8,
wherein the control unit (80) is configured to change the predetermined period based on at least one of a vehicle speed, an engine rotation speed, and an engine load.

10. The exhaust gas control apparatus according to any one of claims 1 to 9,
wherein the catalyst (41) is a catalyst adsorbing ammonia derived from the reductant, and the control unit (80) is configured to adjust the amount of the added reductant such that an amount of an absorbed ammonia increases when the amount of the absorbed ammonia is equal to or less than a predetermined value even the decrease control is performed.

## Patentansprüche

1. Abgassteuerungsvorrichtung für einen Verbrennungsmotor für ein Fahrzeug, die Abgassteuerungsvorrichtung umfassend:
ein Zuführventil (230), das ein Reduktionsmittel zu einem Abgastrakt hinzugibt;
einen Katalysator (41), der NOx in Abgas durch ein hinzugegebenes Reduktionsmittel reinigt;
eine Abgasrückführvorrichtung (13, 14, 15), die konfiguriert ist, um eine Abgasrückführsteuerung durchzuführen, um einen Teil des Abgases in Ansaugluft einzuführen; und
eine Steuereinheit (80), die konfiguriert ist, um eine Äquivalenzverhältnissteuerung durchzuführen, um eine Menge des hinzugegebenen Reduktionsmittels abhängig von einer Menge NOx in dem Abgas anzupassen,
wobei die Steuereinheit (80) **dadurch gekennzeichnet ist, dass** sie konfiguriert ist, um eine Abnahmesteuerung durchzuführen, um die Menge des hinzugegebenen Reduktionsmittels zu verringern, damit sie kleiner ist als die Menge des hinzugegebenen Reduktionsmittels, die durch die Äquivalenzverhältnissteuerung festgelegt ist, wenn ein Zeitraum, während dem eine Fahrzeuggeschwindigkeit gleich wie oder höher als ein festgelegter Wert ist, während die Abgasrückführsteuerung durchgeführt wird, über einen festgelegten Zeitraum oder länger andauert.

2. Abgassteuerungsvorrichtung nach Anspruch 1,
wobei die Steuereinheit (80) konfiguriert ist, um die Menge des hinzugegebenen Reduktionsmittels zu verringern, während eine Menge einer Vergasung des an dem Zuführventil (230) angebrachten Reduktionsmittels abnimmt.

3. Abgassteuerungsvorrichtung nach Anspruch 2,
wobei die Steuereinheit (80) konfiguriert ist, um die Menge des hinzugegebenen Reduktionsmittels basierend auf mindestens einem von einer äußeren Lufttemperatur und einer Temperatur des Zuführventils (230) zu ändern.

4. Abgassteuerungsvorrichtung nach einem der Ansprüche 1 bis 3,
wobei die Steuereinheit (80) konfiguriert ist, um die Menge des hinzugegebenen Reduktionsmittels zu verringern, während eine Menge des im Verbrennungsmotor erzeugten NOx zunimmt.

5. Abgassteuerungsvorrichtung nach Anspruch 4,
wobei die Steuereinheit (80) konfiguriert ist, um die Menge des hinzugegebenen Reduktionsmittels basierend auf mindestens einem von einer Fahrzeuggeschwindigkeit, einer Motordrehgeschwindigkeit und einer Motorlast zu ändern.

6. Abgassteuerungsvorrichtung nach einem der Ansprüche 1 bis 5,
wobei die Steuereinheit (80) konfiguriert ist, um den festgelegten Zeitraum zu verkürzen, während eine Menge einer Vergasung des an dem Zuführventil (230) angebrachten Reduktionsmittels abnimmt.

7. Abgassteuerungsvorrichtung nach Anspruch 6,
wobei die Steuereinheit (80) konfiguriert ist, um den festgelegten Zeitraum basierend auf mindestens einem von einer äußeren Lufttemperatur und einer Temperatur des Zuführventils (230) zu ändern.

8. Abgassteuerungsvorrichtung nach einem der Ansprüche 1 bis 7,
wobei die Steuereinheit (80) konfiguriert ist, um den festgelegten Zeitraum zu verkürzen, während eine Menge von im Verbrennungsmotor erzeugten NOx zunimmt.

9. Abgassteuerungsvorrichtung nach Anspruch 8,
wobei die Steuereinheit (80) konfiguriert ist, um den festgelegten Zeitraum basierend auf mindestens einem von einer Fahrzeuggeschwindigkeit, einer Motordrehgeschwindigkeit und einer Motorlast zu ändern.

10. Abgassteuerungsvorrichtung nach einem der Ansprüche 1 bis 9,
wobei der Katalysator (41) ein Katalysator ist, der von dem Reduktionsmittel stammendes Ammoniak adsorbiert, und die Steuereinheit (80) konfiguriert ist, um die Menge des hinzugegebenen Reduktionsmittels so anzupassen, dass eine Menge eines absorbierten Ammoniaks zunimmt, wenn die Menge des absorbierten Ammoniaks gleich wie oder weniger als ein festgelegter Wert ist, sogar die Abnahmesteuerung wird durchgeführt.

## Revendications

1. Appareil de commande des gaz d'échappement pour un moteur de combustion interne pour un véhicule, l'appareil de commande des gaz d'échappement comprenant :
une soupape d'addition (230) qui ajoute un réducteur à un passage de gaz d'échappement ;
un catalyseur (41) qui purifie les NOx dans les gaz d'échappement par le biais d'un réducteur ajouté ;
un dispositif de recyclage des gaz (13, 14, 15) conçu pour effectuer une commande de recyclage de gaz d'échappement pour introduire une partie du gaz d'échappement dans l'air d'admission ; et
une unité de commande (80) conçue pour effectuer une commande de rapport équivalent pour ajuster une quantité du réducteur ajouté en fonction d'une quantité de NOx dans les gaz d'échappement,
l'unité de commande (80) **caractérisée en ce qu'**elle est conçue pour effectuer une commande de réduction pour réduire la quantité de réducteur ajouté de manière à ce qu'elle soit inférieure à la quantité de réducteur ajouté qui est définie par la commande de rapport équivalent lorsqu'une période pendant laquelle une vitesse de véhicule est égale ou supérieure à une valeur prédéterminée tandis que la commande de recyclage de gaz d'échappement est effectuée continue pendant une période prédéterminée ou pendant plus longtemps.

2. Appareil de commande des gaz d'échappement selon la revendication 1,
dans lequel l'unité de commande (80) est conçue pour réduire la quantité de réducteur ajouté à mesure qu'une quantité de gazéification du réducteur attaché à la soupape d'addition (230) diminue.

3. Appareil de commande des gaz d'échappement selon la revendication 2,
dans laquelle l'unité de commande (80) est conçue pour modifier la quantité de réducteur ajouté en fonction de la température de l'air extérieur et/ou de la température de la soupape d'addition (230).

4. Appareil de commande des gaz d'échappement selon l'une quelconque des revendications 1 à 3,
dans lequel l'unité de commande (80) est conçue pour réduire la quantité du réducteur ajouté à mesure qu'une quantité de NOx générés dans le moteur de combustion interne augmente.

5. Appareil de commande des gaz d'échappement selon la revendication 4,
dans lequel l'unité de commande (80) est conçue pour modifier la quantité de réducteur ajouté en fonction de la vitesse d'un véhicule, de la vitesse de rotation d'un moteur et/ou de la charge d'un moteur.

6. Appareil de commande des gaz d'échappement selon l'une quelconque des revendications 1 à 5,
dans lequel l'unité de commande (80) est conçue pour raccourcir la période prédéterminée à mesure qu'une quantité de gazéification du réducteur attaché à la soupape d'addition (230) diminue.

7. Appareil de commande des gaz d'échappement selon la revendication 6,
dans lequel l'unité de commande (80) est conçue pour modifier la période prédéterminée en fonction de la température de l'air extérieur et/ou de la température de la soupape d'addition (230).

8. Appareil de commande des gaz d'échappement selon l'une quelconque des revendications 1 à 7,
dans lequel l'unité de commande (80) est conçue pour raccourcir la période prédéterminée à mesure qu'une quantité de NOx générés dans le moteur de combustion interne augmente.

9. Appareil de commande des gaz d'échappement selon la revendication 8,
dans lequel l'unité de commande (80) est conçue pour modifier la période prédéterminée en fonction de la vitesse d'un véhicule, de la vitesse de rotation d'un moteur et/ou de la charge d'un moteur.

10. Appareil de commande des gaz d'échappement selon l'une quelconque des revendications 1 à 9,
dans lequel le catalyseur (41) est un catalyseur absorbant de l'ammoniac issu du réducteur, et l'unité de commande (80) est conçue pour ajuster la quantité de réducteur ajouté de manière qu'une quantité d'ammoniac absorbé augmente lorsque la quantité d'ammoniac absorbé est égale ou inférieure à une valeur prédéterminée même la commande de réduction est effectuée.
